Europäisches Patentamt

(19) European Patent Office .

Office européen des brevets

(11) Publication number: **0 086 415**
**B1**

(12) **EUROPEAN PATENT SPECIFICATION**

(45) Date of publication of patent specification: **07.01.88**

(51) Int. Cl.⁴: **G 01 N 27/04, G 01 N 27/12**

(21) Application number: **83101078.0**

(22) Date of filing: **04.02.83**

(54) **Humidity sensitive device.**

(30) Priority: **12.02.82 JP 21433/82**
**12.03.82 JP 39826/82**

(43) Date of publication of application:
**24.08.83 Bulletin 83/34**

(45) Publication of the grant of the patent:
**07.01.88 Bulletin 88/01**

(84) Designated Contracting States:
**DE FR GB IT**

(56) References cited:
**EP-A-0 013 022**
**EP-A-0 033 520**
**EP-A-0 045 950**
**GB-A-2 025 068**

**Patent Abstracts of Japan vol. 6, no. 237, 25 November 1982**
**IEEE TRANSACTIONS ON ELECTRON DEVICES, vol. ED-2, no. 1, January 1982, New York T. NITTA et al. "Multifunctional ceramic sensors: humidity-gas sensor and temperature-humidity sensor", pages 95-101**

(73) Proprietor: **Matsushita Electric Industrial Co., Ltd.**
**1006, Oaza Kadoma**
**Kadoma-shi Osaka-fu, 571 (JP)**

(72) Inventor: **Fukushima, Fumio**
**2241-3, Oaza-Shimanouchi**
**Miyazaki City, 880-01 (JP)**
Inventor: **Terada, Jiro**
**23-8, Kozu 4-chome**
**Katano City, 576 (JP)**
Inventor: **Nitta, Tsuneharu**
**15-18, Myokenzaka 2-chome**
**Katano City, 576 (JP)**

(74) Representative: **Kuhnen, Wacker & Partner**
**Schneggstrasse 3-5 Postfach 1729**
**D-8050 Freising (DE)**

Courier Press, Leamington Spa, England.

## Description

Background of the invention
1. Field of the invention:
The present invention relates to a humidity sensitive device for use in detection of humidity in a food cooking apparatus, dryer, air conditioner or a measurement apparatus.

2. Description of the prior art:
Generally speaking, metal oxide is superior in physisorption of water, and the amount of the physisorbed water depends on temperature and humidity of the atmosphere. And when water is physisorped on the surface of the metal oxide, then ionic conduction increases thereby lowering electric resistance.

Most of the conventional humidity sensing devices utilize physisorption of the water molecule on the surface of the above-mentioned metal oxide, and as metal oxide a compound or composition has been used for example $Fe_3O_4$, $Fe_2O_3$, $Cr_2O_3$, $Ni_2O_3$, $Al_2O_3$, $TiO_2$, $ZnO$, $MgCr_2O_4$, $TiO_2$—$V_2O_5$ compositions and $ZnO$—$Cr_2O_3$—$Li_2O$—$V_2O_5$ compositions.

The above-mentioned humidity sensitive device has a characteristic of being capable of converting humidity value to electric resistance value, and by utilizing this characteristic various humidity sensing apparatuses or its application apparatuses have been developed.

Among utilization of the humidity sensing device, there are air conditioners, food cooking apparatuses, dryers and measurement apparatuses.

However, the above-mentioned conventional humidity sensing device has a severe drawback. That is, the conventional humidity sensing device has on the one hand a poor humidity-resistance characteristic in a severe atmosphere and on the other hand limitations with respect to the atmospheric temperature during humidity detection. The reason of the poor characteristic is that when dust or oil vapor being contained in a severe atmosphere is physisorbed onto the metal oxide surface, then the physisorption of water changes. And the reason of the narrow atmospheric temperature range suitable for humidity detection is that above 100°C the physisorption of water onto the metal oxide surface rapidly decreases and under the atmospheric temperature of 0°C, the water physisorbed on the metal oxide surface changes its nature to become ice.

In order to improve the above-mentioned atmospheric humidity-resistance characteristic, hitherto the sensitive device has been washed by organic solvents or was heated to a high temperature to burn off the physisorbed substances.

EP—A—0 013 022—from which the present claim 1 starts in its pre-characterizing part—shows a humidity detecting element, comprising a porcelain resistor element which is sandwiched between two electrodes. Via the electrodes the sensing element is connected with an electric circuit, said circuit determining the sensed humidity. In order to clean the humidity detecting resistor element from oil, dust or the like having been absorbed and adhered on the resistor element, a heating operation is provided up to temperatures of approximately 400°C or more. During normal humidity sensing the resistor is warmed up to a temperature of several degrees higher than the ambient temperature for prevention of dew.

However, due to the fact that this humidity sensing device has to be cleaned up in certain intervals by heating up the resistor element there is the drawback that between the cleaning operations sensitivity of the sensing element will deviate due to contaminations being physisorbed on the resistor's surface. A stable and correct humidity sensing operation is thus not possible.

From EP—A—0 033 520 a single multifunctional sensing and measuring system is known being capable of detecting both temperature and humidity. The single sensing element can detect simultaneously and rapidly both the variation in the ambient temperature and humidity, respectively, by means of variation in electric resistance and dielectric constant of the sensing element.

IEE transactions on electron devices vol. ED-29, no. 1, January 1982 finally shows "multifunctional ceramic sensors: humidity-gas sensor and temperature-humidity sensor" and it is explained there that the several sensors must be heated up in certain intervals to clean the sensing element from contaminations having physisorbed on the sensors surface.

As becomes evident, the conventional method to clean the humidity sensitive device, i.e. to heat up the sensitive device in certain intervals, hinders continuous detection of humidity. This shortcoming of the known humidity sensitive devices is of common problem in the devices utilizing water physisorption.

There has been disclosed another type of atmosphere sensitive device which does not utilize the physisorption of water.

This is a gas detection device utilizing ceramic of $SnO_2$ composition. But this gas detection device comprising the $SnO_2$ ceramic is originally designed for the detection of reducing gas, and therefore when the reducing gas exists besides the humidity then the sensitive device shows considerable output deviations. Accordingly, such sensitive device can not be used for accurate measurement of humidity in an atmosphere having a possibility of including the reducing gas.

From the above-mentioned circumstances it has been a great demand for a humidity sensing device which is sensitive only for humidity in a wide range of atmospheric temperature.

## Summary of the invention

Purpose of the present invention is to provide a humidity sensing device as referred to in Claim 1 which is capable of humidity sensing for wide range of atmospheric temperature without influence by dust and oil vapor in the atmosphere.

The humidity sensitive device in accordance with the present invention can measure humidity in a wide range of atmospheric temperature by utilizing a humidity sensitive device which changes electric resistance depending on the humidity at the temperature of the sensitive device of above 200°C which is kept by an electric heater provided near the humidity sensing device.

a humidity sensitive resistor, resistance of which is dependent upon chemisorption of humidity at a temperature substantially above 200°C, the humidity sensitive resistor containing as main component at least one substance selected from the group consisting of $ZrO_2$, $Nb_2O_5$ and $Ta_2O_5$ and

an electric heater for continuously maintaining the humidity sensitive resistor during humidity sensing operation, so that the resistance of the humidity sensitive device depends on atmospheric humidity at a high temperature, e.g. above 200°C, where effect of physisorption becomes negligibly small.

Furthermore, by addition as auxiliary component at least one substance selected from the group consisting of BeO, MgO, CaO, BaO, SrO, ZnO, CdO and $Al_2O_3$, the humidity sensing ability in high temperature is further improved.

## Brief explanation of the drawing

Fig. 1 is a perspective view of an example of the humidity sensitive apparatus comprising a humidity sensitive device according to the present invention;

Fig. 2 is a graph showing the relation between absolute humidity vs. resistance of the humidity sensitive resistor; and

Fig. 3 is a circuit diagram of an example of the humidity sensitive apparatus comprising a humidity sensitive device according to the present invention.

## Description of the preferred embodiments

A humidity sensitive device in accordance with the present invention comprises a humidity sensitive resistor with a resistance responsive to humidity of the ambient atmosphere at above 200°C. Even when there is dust or oil vapor in the ambient atmosphere they do not become physisorped on the surface of the humidity sensitive resistor, since it is used at a raised temperature of above 200°C. And even if dust or oil vapor is physisorped on the surface, they are rapidly burnt or vaporized and do not influence the humidity sensitivity of the resistor.

The humidity sensitive device in accordance with the present invention is in an embodiment a metal oxide ceramic containing at least one substance selected from the group consisting of $ZrO_2$, $Nb_2O_5$ and $Ta_2O_5$. The inventors found that a humidity sensitive resistor having such construction changes electric resistance only depending on the humidity of the ambient atmosphere of above 200°C. The humidity sensitive resistor changes its resistance responding to ambient humidity by means of chemisorption of water instead of physisorption of the conventional humidity sensitive devices and can detect humidity even in a high temperature atmosphere.

It has been experimentally found that the temperature of the humidity sensitive resistor should be substantially above 200°C. The reason why is that below 200°C the device is likely to be influenced by physisorption of the water, and further organic substances (for instance oil particles or tar included in smoke or the like) is likely to be absorbed under 200°C, and such absorption will cause error and unstability of characteristics during usage of the device, thereby disabling stable humidity detection for a long time.

Furthermore, when a reducing gas is included in the ambient atmosphere when humidity is measured, the temperature of the humidity sensitive resistor is preferably above 500°C. This is because under 500°C, by means of the existence of the reducing gas the electric resistance changes and the measured humidity value is not correct.

Furthermore, the measurement of the humidity through resistance change of the humidity sensitive resistor should be preferably made by AC current. The reason why is that when a DC voltage is impressed on a humidity sensitive resistor at a raised temperature, migration of certain ionic components is produced, thereby producing change of characteristics.

Hereinafter the invention will be elucidated with respect to several examples as follows:

## Example 1

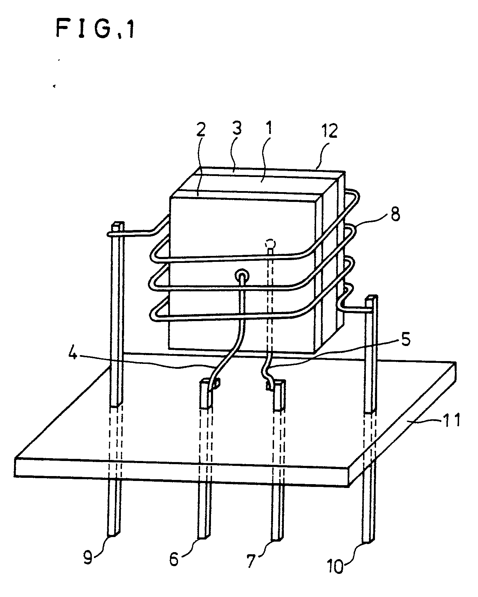

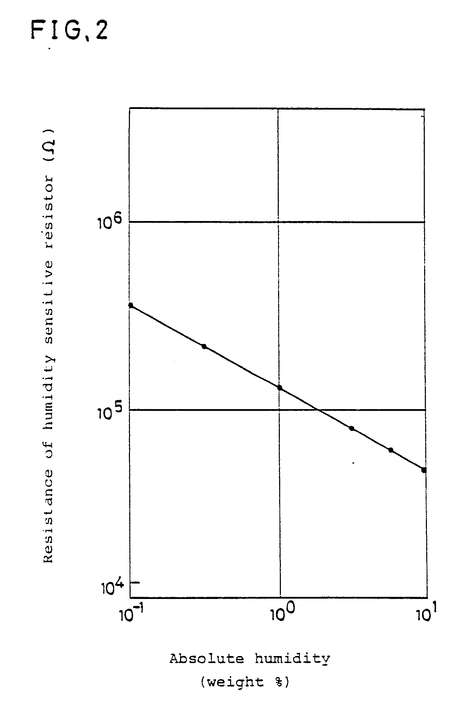

As starting material for humidity sensitive resistor, $ZrO_2$ powder of purity of above 99.9% is used. The material powder is pressed into a square plate of 5 mm×5 mm×0.5 mm by a pressure of $73,575 \cdot 10^6$ N/m² (750 kg/cm²). The resultant pressed plate is fired at 1300°C in air for 2 hours. Thus a humidity sensitive resistor body is formed. Then on both principal faces of the resistor body a conductive paste comprising a composition mainly containing $RuO_2$ as glaze resistor paste is applied, and as widely known, is fired at about 800°C to form the electrodes 2 and 3 as shown in Fig. 1. Then lead wires 4 and 5 are fire-bonded by using said conductive paste on the electrodes 2 and 3. The lead wires 4 and 5 are preferably Pt-Ir-alloy wires (Pt: 90%, Ir: 10%). The other ends of the lead wires 4 and 5 are connected to fixing terminals 6 and 7 of a base 11 by means of electric welding. Then an electric heating wire 8 of platinum is coiled and fixed around the so produced humidity sensitive resistor 1 in an insulated manner thereto and both ends of the electric heater 8 are connected to terminals 9 and 10 by electric welding. The base or substrate 11 is made of insulating ceramic of metal oxide such as $Al_2O_3$ and holds the above-mentioned component. In the above-mentioned example of the humidity sensitive resistor the resistor 1 is heated and kept at 600°C by applying DC current through the electric heater 8. The characteristic of the humidity sensitive resistor device of the above-mentioned example is shown in Fig. 2 wherein abscissa is graduated by absolute humidity (weight %) and the ordinate is graduated by resistance of humidity sensitive resistor. As shown in Fig. 2 the humidity sensitive resistor of the above example can stably and accurately measure the ambient humidity by heating and keeping it above 600°C without undesirable influence of dust oil vapor and reducing gas (e.g. 0 to 3000 ppm concentration of ethyl alcohol) in the ambient atmosphere.

Example 2—10
By using material powder of at least one selected from the group consisting of $ZrO_2$, $Nb_2O_5$ and $Ta_2O_5$ and in the same process as described in the preceding example 1, a humidity sensitive device is produced. Sensitivities corresponding to contents ratio of the materials of the examples 2—10 are shown in Table 1, the sensitivity of humidity measurement is defined by the following equation:

$$S = \log (R_1/R_0) \tag{1}$$

wherein
$R_0$: resistance of the humidity sensitive resistor at 600°C in dry air,
$R_1$: resistance of the humidity sensitive resistor at 600°C in an air containing 10 weight % of vapor.

TABLE 1

| Example | Contents (mol ratio) | Sensitivity |
|---|---|---|
| 2 | $ZrO_2$ | −0.66 |
| 3 | $Nb_2O_5$ | −0.48 |
| 4 | $Ta_2O_5$ | −0.49 |
| 5 | 0.9 $ZrO_2$—0.1 $Nb_2O_5$ | −0.72 |
| 6 | 0.5 $ZrO_2$—0.5 $Nb_2O_5$ | −0.68 |
| 7 | 0.1 $ZrO_2$—0.9 $Nb_2O_5$ | −0.65 |
| 8 | 0.9 $ZrO_2$—0.1 $Ta_2O_5$ | −0.75 |
| 9 | 0.1 $ZrO_2$—0.9 $Ta_2O_5$ | −0.70 |
| 10 | 0.4 $ZrO_2$—0.3 $Nb_2O_5$—0.3 $Ta_2O_5$ | −0.67 |

As shown in Table 1 the humidity sensitive device of the present invention has a good sensitivity at a high temperature. The humidity sensitive device manufactured in the above-mentioned examples can measure temperatures without undesirable influences from ambient atmosphere temperature, such as, oil vapor and reducing gases (e.g. 0—3000 ppm of ethyl alcohol) in ambient atmosphere, when heated and retained at a predetermined temperature (for instance 600°C).

Examples 11—30
As starting material powder containing at least one main compound selected from the group consisting of $ZrO_2$, $Nb_2O_5$ and $Ta_2O_5$, and at least one sub-component selected from the group consisting of BeO, MgO, CaO, SrO, BaO, ZnO, CdO and $Al_2O_3$ is used and the humidity sensitive device is manufactured in a similar manner as that of the first example.
The characteristics of the humidity sensitive device being manufactured corresponding to contents of the materials are shown in the below mentioned Table 2. The humidity sensitivity is defined in the same equation (1) as that in the preceding examples 2—10.

TABLE 2

| Example | Contents (mol ratio) | Sensitivity |
|---|---|---|
| 11 | 0.9 $ZrO_2$—0.1 MgO | −0.70 |
| 12 | 0.8 $ZrO_2$—0.2 MgO | −0.72 |
| 13 | 0.7 $ZrO_2$—0.3 MgO | −0.72 |
| 14 | 0.6 $ZrO_2$—0.4 MgO | −0.70 |
| 15 | 0.3 $ZrO_2$—0.6 MgO | −0.65 |
| 16 | 0.9 $ZrO_2$—0.1 BeO | −0.68 |
| 17 | 0.9 $ZrO_2$—0.1 CaO | −0.66 |
| 18 | 0.9 $ZrO_2$—0.1 SrO | −0.68 |
| 19 | 0.9 $ZrO_2$—0.1 BaO | −0.69 |
| 20 | 0.9 $ZrO_2$—0.1 ZnO | −0.70 |
| 21 | 0.9 $ZrO_2$—0.1 CdO | −0.67 |
| 22 | 0.95 $ZrO_2$—0.05 $Al_2O_3$ | −0.79 |
| 23 | 0.9 $ZrO_2$—0.1 $Al_2O_3$ | −0.81 |
| 24 | 0.8 $ZrO_2$—0.2 $Al_2O_3$ | −0.80 |
| 25 | 0.9 $Nb_2O_5$—0.1 MgO | −0.60 |
| 26 | 0.9 $Nb_2O_5$—0.1 ZnO | −0.62 |
| 27 | 0.9 $Nb_2O_5$—0.1 $Al_2O_3$ | −0.68 |
| 28 | 0.9 $Ta_2O_5$—0.1 MgO | −0.58 |
| 29 | 0.9 $Ta_2O_5$—0.1 ZnO | −0.58 |
| 30 | 0.9 $Ta_2O_5$—0.1 $Al_2O_3$ | −0.54 |

As shown in the Table 2 the humidity sensitive resistor of the examples 11—30 has good sensitivities at high temperature and sensitivities are increased as a result of adding the sub-components.

As is obvious from Table 2, the humidity sensitive devices of these examples can measure humidities without undesirable influences from ambient atmosphere temperature, thus, oil vapor and reducing gases (e.g. 0—3000 ppm of ethyl alcohol) in ambient atmosphere, when heated and retained at a predetermined temperature (for instance 600°C).

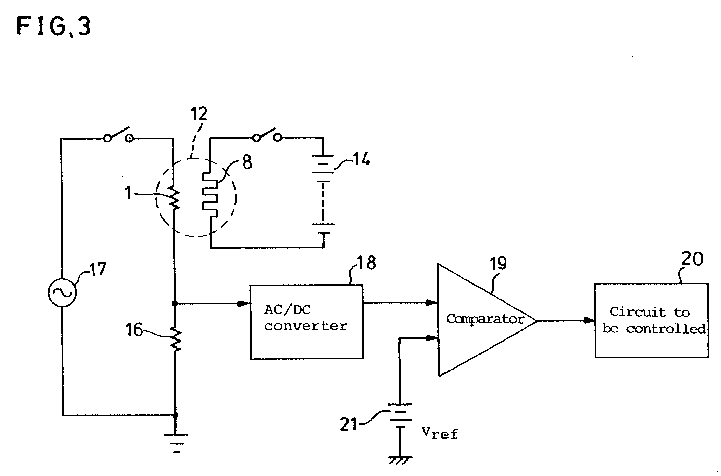

Fig. 3 shows a circuit block diagram of an example of a humidity sensitive apparatus embodying the humidity sensitive device of the above examples. As shown in Fig. 3, the apparatus comprises a humidity sensitive device 12 which comprises a humidity sensitive resistor 1 and a heater 8 provided to heat the humidity sensitive resistor 1 in an insulated manner. The heater 8 is connected to a DC power source 14 and heats and keeps the humidity sensitive resistor 1 at a certain high temperature, e.g. about 600°C. As one example the humidity sensitive device 12 is the device manufactured in the preceding example 1.

The humidity sensitive resistor 1 is connected in series with a constant resistor 16, thereby forming a voltage divider, which is connected across an AC power source 17. Accordingly, an AC output voltage responding to the measured humidity is output across the constant resistor 16. Then the output voltage at the junction point between the humidity sensitive resistor 1 and the constant resistor 16 is impressed to an AC/DC converter 18.

Then the output of the AC/DC converter 18 is given to the comparator 19, which compares the output with a reference voltage given by a reference voltage source 21. The comparator 19 issues an output signal to a circuit 20 to be controlled. The reference voltage $V_{ref}$ should be suitably selected depending on the characteristics and type of the circuit 20 to be controlled.

Fig. 3 is an example of a circuit of the humidity sensitive apparatus utilizing the humidity sensitive device in accordance with the present invention, and the circuit is not necessarily limited to that shown in Fig. 3.

Though the humidity sensitive resistor 12 in Fig. 3 is for example the one comprising $ZrO_2$ as main component, any other type of humidity sensitive resistor, for instance that which comprises as main component one substance selected from the group consisting of $NiO_2$, $ZrO_2$, $Nb_2O_5$ and $Ta_2O_5$, and furthermore such sub-component as one substance selected from the group consisting of BeO, MgO, CaO, BaO, SrO, ZrO, CdO and $Al_2O_3$ may be used.

The above-mentioned humidity sensitive device in accordance with the present invention operates at a temperature substantially above 200°C and therefore

(1) a very reliable high accuracy measurement can be made even in an ambient atmosphere containing dust or oil vapor or smoke,

(2) the humidity measurement can be made continuously without interruption,

(3) the humidity measurement can be made for a high temperature ambient atmosphere, and

(4) the humidity measurement can be made even in an atmosphere containing at least a reducing gas by heating and keeping the humidity sensitive resistor to a high temperature, e.g. above 500°C.

**Claims**

1. A humidity sensitive device (12) for sensing the humidity of an ambient atmosphere, comprising: a humidity sensitive resistor (1), said humidity resistor having two electrodes (2, 3) and being electrically connected therethrough to a circuit for determining the sensed humidity; and an electric heater (8) for heating said humidity sensitive resistor (1),

characterized in that,

during measurement, the resistance of said humidity sensitive resistor (1) is dependent upon chemisorption of water vapor at a temperature substantially above 200°C where substantially no physisorption is possible;

said humidity sensitive resistor (1) containing as main component at least one substance selected from the group consisting of $ZrO_2$, $Nb_2O_5$ and $Ta_2O_5$; and

said electric heater (8) maintains said humidity sensitive resistor (1) continuously at a temperature substantially above 200°C during the humidity sensing operation.

2. A sensitive device according to claim 1, characterized in that said humidity sensitive resistor (1) further comprises as sub-component one substance selected from the group consisting of BeO, MgO, CaO, BaO, SrO, ZnO, CdO and $Al_2O_3$.

3. A sensitive device according to claim 1 or 2, characterized in that said electric heater (8) is fed with a controlled current for heating said humidity sensitive resistor (1),

a resistor (16) is connected in series to said humidity sensitive resistor (1) thereby forming a voltage divider,

an AC voltage source (17) is provided for impressing a predetermined AC voltage across said voltage divider, and

means (18, 19) are provided for measuring an AC output signal of said voltage divider and issuing an output indicating the sensed humidity.

4. A sensitive device according to any one of the preceding claims, characterized in that said humidity sensitive resistor (1) has a metal oxide substrate and electrodes on one surface thereof, the resistivity of said humidity sensitive resistor (1) decreasing with an increase of the ambient humidity at a temperature above 200°C, said metal oxide substrate consisting essentially of said main component; and said heater (8) for heating said humidity resistor (1) is positioned at proximity to and in isolated relation from said humidity sensitive resistor (1).

5. A sensitive device according to claim 4, characterized in that: said resistor (16) is a constant resistor; the means (18, 19) for measuring the AC output signal comprises: an AC—DC converter (18) coupled to said constant resistor (16) and a comparator (19) coupled to said AC—DC converter (18) for outputting a logic signal corresponding to the comparison value between the DC output voltage of the AC—DC converter (18) and a predetermined reference voltage; and a power source (14) is coupled to said heater (8) for supplying an electric power to said heater (8), thereby maintaining said humidity sensitive resistor (1) at a temperature substantially above 200°C.

**Patentansprüche**

1. Feuchtigkeitsempfindliche Vorrichtung (12) zur Messungen der Feuchtigkeit in einer umgebenden Atmosphäre, mit:

einem feuchtigkeitsempfindlichen Widerstand (1), wobei der Feuchtigkeitswiderstand zwei Elektroden (2, 3) aufweist und mit ihnen elektrisch mit einem Schaltkreis zur Bestimmung der erfaßten Feuchtigkeit verbunden ist; und mit einem elektrischen Heizelement (8) zum Beheizen des feuchtigkeitsempfindlichen Widerstandes (1), dadurch gekennzeichnet, daß

während des Meßvorganges der Widerstand des feuchtigkeitsempfindlichen Widerstandes (1) abhängig ist von Chemisorption von Wasserdampf bei einer Temperatur im wesentlichen oberhalb von 200°C, wo im wesentlichen keine Physisorption möglich ist;

der feuchtigkeitsempfindliche Widerstand (1) als Hauptkomponente wenigstens eine Substanz aus der folgenden Gruppe aufweist: $ZrO_2$, $Nb_2O_5$ und $Ta_2O_5$; und

daß das elektrische Heizelement (8) den feuchtigkeitsempfindlichen Widerstand (1) während des Feuchtigkeits-Meßvorganges ununterbrochen bei einer Temperatur im wesentlichen oberhalb von 200°C hält.

2. Vorrichtung nach Anspruch 1, dadurch gekennzeichnet, daß der feuchtigkeitsempfindliche Widerstand (1) weiterhin als Nebenkomponente eine Substanz aus der folgenden Gruppe aufweist: BeO, MgO, CaO, BaO, SrO, ZnO, CdO und $Al_2O_3$.

3. Vorrichtung nach Anspruch 1 oder 2, dadurch gekennzeichnet, daß das elektrische Heizelement (8) mit einem gesteuerten Strom zum Beheizen des feuchtigkeitsempfindlichen Widerstandes (1) versorgt wird, daß ein Widerstand (16) in Reihe mit dem feuchtigkeitsempfindlichen Widerstand (1) geschaltet ist, und hierdurch einen Spannungsteiler bildet, daß eine Wechselspannungsquelle (17) vorgesehen ist, um eine vorbestimmte Wechselspannung an den Spannungsteiler anzulegen, und

daß Einrichtungen (18, 19) vorgesehen sind, um ein Wechselstrom-Ausgangssignal des Spannungsteilers zu messen und einen Ausgang bereitzustellen, der die erfaßte Feuchtigkeit anzeigt.

4. Vorrichtung nach einem der vorhergehenden Ansprüche, dadurch gekennzeichnet, daß der feuchtigkeitsempfindliche Widerstand (1) ein Metalloxyd-Substrat und Elektroden an einer dessen Oberflächen aufweist, wobei der Widerstand des feuchtigkeitsempfindlichen Widerstandes (1) mit einem Anwachsen der Umgebungsfeuchtigkeit bei einer Temperatur oberhalb 200°C abnimmt und das Metalloxyd-Substrat im wesentlichen aus der Hauptkomponente besteht; und daß das Heizelement (8) zum Aufheizen des Feuchtigkeits-Widerstandes (1) nahe bei und in isolierter Beziehung zu dem feuchtigkeitsempfindlichen Widerstand (1) angeordnet ist.

5. Vorrichtung nach Anspruch 4, dadurch gekennzeichnet, daß: der Widerstand (16) ein Festwiderstand ist; die Einrichtungen (18, 19) zum Messen des Wechselspannungs-Ausgangssignales aufweisen: einen Wechselstrom/Gleichstrom-Wandler (18), der mit dem Festwiderstand (16) verbunden ist und einen Komparator (19), der mit dem Wechselstrom/Gleichstrom-Wandler (18) verbunden ist, um ein logisches Signal entsprechend dem Vergleichswert zwischen der Ausgangsgleichspannung des Wechselstrom/Gleichstrom-Wandlers (18) und einer festgelegten Referenzspannung entspricht auszugeben; und daß eine Energiequelle (14) mit dem Heizelement (8) verbunden ist, um elektrische Leistung dem Heizelement (8) zuzuführen, so daß der feuchtigkeitsempfindliche Widerstand (1) bei einer Temperatur im wesentlichen oberhalb von 200°C gehalten wird.

**Revendications**

1. Dispositif (12) sensible à l'humidité pour détecter l'humidité d'une atmosphère ambiante, comportant: une résistance (1) sensible à l'humidité, ladite résistance sensible à l'humidité comportant deux électrodes (2, 3) et étant électriquement reliée à travers celles-ci à un circuit pour déterminer l'humidité détectée; et un dispositif électrique de chauffage (8) pour chauffer ladite résistance (1) sensible à l'humidité, caractérisé en ce que,

pendant la mesure, la résistance de ladite résistance (1) sensible à l'humidité dépend de l'absorption chimique de vapeur d'eau à une température sensiblement supérieure à 200°C pour laquelle sensiblement aucune absorption physique n'est possible;

ladite résistance (1) sensible à l'humidité contenant, comme constituant principal, au moins une substance sélectionnée dans le groupe consistant en $ZrO_2$, $Nb_2O_5$ et $Ta_2O_5$; et

ledit dispositif électrique de chauffage (8) maintient ladite résistance (1) sensible à l'humidité continuellement à une température sensiblement supérieure à 200°C pendant l'opération de détection d'humidité.

2. Un dispositif sensible selon la revendication 1, caractérisé en ce que ladite résistance (1) sensible à l'humidité comporte de plus, comme sous-constituant, une substance sélectionnée dans le groupe consistant en BeO, MgO, CaO, BaO, SrO, ZnO, CdO et $Al_2O_3$.

3. Un dispositif sensible selon la revendication 1 ou 2, caractérisé en ce que ledit dispositif électrique de chauffage (8) est alimenté avec un courant commandé pour chauffer ladite résistance (1) sensible à l'humidité, une résistance (16) est reliée en série avec ladite résistance (1) sensible à l'humidité pour former ainsi un diviseur de tension,

une source de tension alternative (17) est prévue pour appliquer une tension alternative prédéterminée sur ledit diviseur de tension, et

des moyens (18, 19) sont prévus pour mesurer un signal alternatif de sortie dudit diviseur de tension et pour délivrer une sortie indiquant l'humidité détectée.

4. Un dispositif sensible selon l'une quelconque des revendications précédentes, caractérisé en ce que ladite résistance (1) sensible à l'humidité comporte un substrat en oxyde métallique et des électrodes sur

7

une surface de celui-ci, la résistivité de ladite résistance (1) sensible à l'humidité décroissant avec une augmentation de l'humidité ambiante à une température supérieure à 200°C, ledit substrat en oxyde métallique étant constitué essentiellement par ledit constituant principal; et ledit dispositif de chauffage (8) pour chauffer ladite résistance (1) sensible à l'humidité est disposé à proximité de ladite résistance (1) sensible à l'humidité et en relation d'isolation par rapport à celle-ci.

5. Un dispositif sensible selon la revendication 4, caractérisé en ce que: ladite résistance (16) est une résistance constante; les moyens (18, 19) pour mesurer le signal alternatif de sortie comportent: un convertisseur (18) alternatif—continu couplé à ladite résistance constante (16) et un comparateur (19) couplé audit convertisseur alternatif—continu (18) pour délivrer en sortie un signal logique correspondant à la valeur de comparaison entre la tension continue de sortie du convertisseur alternatif-continu (18) et une tension de référence prédéterminée; et une source d'alimentation (14) est couplée audit dispositif de chauffage (8) pour délivrer une alimentation électrique audit dispositif de chauffage (8), pour maintenir ainsi ladite résistance (1) sensible à l'humidité à une température sensiblement supérieure à 200°C.

# FIG.1

FIG.2

Absolute humidity
(weight %)

Y-axis: Resistance of humidity sensitive resistor ($\Omega$)

2

FIG.3